# EUROPÄISCHE PATENTSCHRIFT

(11) **EP 1 396 298 B1**
(45) Veröffentlichungstag und Bekanntmachung des Hinweises auf die Patenterteilung: **29.03.2006**
(21) Anmeldenummer: 03028544.9
(22) Anmeldetag: 23.06.2001
(51) Int. Cl.: B21D 28/06, F16J 15/08

(54) **Verfahren zum Herstellen einer mehrlagigen Dichtung**
Method for producing multi-layered gaskets
Procédé de fabrication des joints d'étanchéité multicouche

(30) Priorität: 30.06.2000 DE 10031095
(43) Veröffentlichungstag der Anmeldung: 10.03.2004
(62) Teilanmeldung aus: 01115265.9
(73) Patentinhaber: ElringKlinger AG, 72581 Dettingen (DE)
(72) Erfinder: Fritz, Wolfgang, 72555 Metzingen 3 (DE)
(74) Vertreter: Hoeger, Stellrecht & Partner Patentanwälte

(56) Entgegenhaltungen:
- EP-A- 0 338 537
- EP-A- 0 676 279
- DE-C- 884 936
- US-A- 4 344 342
- US-A- 4 648 607
- US-A- 4 826 708
- PATENT ABSTRACTS OF JAPAN vol. 1995, no. 05, 30. Juni 1995 (1995-06-30) -& JP 07 035239 A (TAIHO KOGYO CO LTD), 7. Februar 1995 (1995-02-07)
- PATENT ABSTRACTS OF JAPAN vol. 018, no. 569 (M-1695), 31. Oktober 1994 (1994-10-31) & JP 06 207673 A (ISHINO GASKET KOGYO KK), 26. Juli 1994 (1994-07-26)

## Beschreibung

Die vorliegende Erfindung betrifft ein Verfahren gemäß Oberbegriff des Anspruchs 1 und eine Dichtung gemäß Oberbegriff des Anspruchs 11. Ein solches Verfahren und eine solche Dichtung sind aus der JP-A-06207673 bekannt.

Durch die Zusammenfassung mehrerer Bearbeitungsschritte in einem Folgeverbundwerkzeug werden die Werkzeugkosten gegenüber der Verwendung von Einzeiwerkzeugen gesenkt und die Durchlaufzeiten der Dichtungslagenabschnitte durch die Bearbeitungsstationen verringert.

Bei den bekannten Verfahren der eingangs genannten Art ist die Vorschubstrecke v größer als die Ausdehnung b der Außenkontur einer fertigen Dichtungslage längs der Vorschubrichtung, so daß zwischen der Hinterkante einer in der Vorschubrichtung vorne liegenden Dichtungslage und der Vorderkante einer in der Vorschubrichtung dahinter liegenden Dichtungslage ein Abstand v-b eingehalten wird.

Dieser Abstand zwischen längs der Vorschubrichtung aufeinanderfolgenden Dichtungslagen hat zur Folge, daß das zwischen den einander zugewandten. Außenkonturlinien zweier einander benachbarter Dichtungslage angeordnete Ausgangsmaterial ungenutzt bleibt. Außerdem müssen die einander zugewandten Außenkonturlinien zweier benachbarter Dichtungslagen mittels zweier verschiedener Schneidkanten geschnitten werden.

Der vorliegenden Erfindung liegt die Aufgabe zugrunde, ein Verfahren der vorstehend genannten Art zu schaffen, bei dem die Außenkonturlinien der Dichtungslagen mit geringerem Aufwand geschnitten werden und das Ausgangsmaterial besser genutzt wird als bei den bekannten Verfahren. Diese Aufgabe wird erfindungsgemäß durch den Gegenstand der Anspruchs 1 gelöst. Vorteilhafte Ausführungen des Verfahrens sind den Unteransprüchen zu entnehmen.

Das Folgeverbundwerkzeug des erfindungsgemäßen Verfahrens kommt mit einem einfach aufgebauten Außenkonturlinien-Schneidwerkzeug aus, welches für jedes Paar einander benachbarter Dichtungslagen nur eine einzige Schneidkante umfaßt.

Da das Außenkonturlinien-Schneidwerkzeug zum Trennen des Paars einander benachbarter Dichtungslagen nur längs einer Schneidkante schneidet, ist die Kraft, mit welcher das Außenkonturlinien-Schneidwerkzeug gegen das Ausgangsmaterial geführt werden muß, kleiner als bei den bekannten Verfahren, bei welchen das Außenkonturlinien-Schneidwerkzeug für jedes Paar einander benachbarter Dichtungslagen mindestens zwei Schneidkanten aufweisen muß. Aufgrund der verringerten Schneidkraft nimmt auch die Lärmentwicklung beim Schneiden der Außenkonturlinien ab.

Ferner liegen bei dem erfindungsgemäßen Verfahren die einander zugewandten Außenkonturlinien zweier einander benachbarter Dichtungslagen unmittelbar aneinander an, so daß kein Verschnitt zwischen den einander benachbarten Dichtungslagen entsteht und das Ausgangsmaterial besser ausgenutzt wird.

Die Dichtungslagen können insbesondere Dichtungsbleche sein, die aus einem metallischen Ausgangsmaterial hergestellt werden und aus denen eine ein-oder mehrlagige Metalldichtung gebildet wird.

Die Dichtungslagen können aber auch aus einem Weichstoff hergestellt und zur Bildung einer ein- oder mehrlagigen Weichstoffdichtung verwendet werden.

Dabei kann vorgesehen sein, daß aus jedem Dichtungslagenabschnitt jeweils eine einzige fertige Dichtungslage hergestellt wird. In diesem Fall ist die Vorschubstrecke v im wesentlichen gleich groß wie die Ausdehnung b der Außenkontur dieser fertigen Dichtungslage längs der Vorschubrichtung.

Es kann aber auch vorgesehen sein, daß aus jedem Dichtungslagenabschnitt des Ausgangsmaterials eine mehrere einzelne Dichtungslagen umfassende Gruppe von Dichtungslagen hergestellt wird. In diesem Fall ist die Vorschubstrecke v im wesentlichen gleich groß wie die Ausdehnung b der Außenkontur der Gruppe von fertigen Dichtungslagen. Die Ausdehnung der Außenkontur der Gruppe von fertigen Dichtungslagen kann dabei größer sein als die Ausdehnung der Außenkontur einer einzelnen Dichtungslage aus der Gruppe von Dichtungslagen.

Die Dichtungslagen einer Dichtungslagengruppe können einander gleiche oder voneinander verschiedene Außenkonturen aufweisen.

Auch wenn die Dichtungslagen einer Dichtungslagengruppe einander gleiche Außenkonturen aufweisen, so können sie in dem Dichtungslagenabschnitt in gleicher oder in voneinander verschiedener Ausrichtung angeordnet sein. Insbesondere kann vorgesehen sein, daß zwei einander benachbarte Dichtungslagen derselben Dichtungslagengruppe im wesentlichen punktsymmetrisch zueinander ausgebildet und angeordnet sind.

Die beiden einander benachbarten Dichtungslagen, deren Außenkonturlinien erfindungsgemäß mit derselben Schneidkante geschnitten werden, können derselben Gruppe von Dichtungslagen oder aber zwei aufeinanderfolgenden Gruppen von Dichtungslagen angehören.

Die zu derselben Gruppe von Dichtungslagen gehörenden Dichtungslagen können in der Außenkonturlinien-Schneidstation oder in einer vor oder hinter der Außenkonturlinien-Schneidstation liegenden weiteren Bearbeitungsstation des Folgeverbundwerkzeugs voneinander getrennt werden.

Bei einer bevorzugten Ausgestaltung des erfindungsgemäßen Verfahrens ist vorgesehen, daß mindestens eine der Bearbeitungsstationen als Freischneidstation ausgebildet ist, die in der Vorschubrichtung vor der Außenkonturlinien-Schneidstation angeordnet ist und in der aus dem Ausgangsmaterial mindestens eine Freischneidfläche herausgeschnitten wird, in welche die Schneidkante des Außenkonturlinien-Schneidwerkzeugs der Außenkonturlinien-Schneidstation beim Schneidvorgang eintaucht. Durch dieses Freischneiden wird erreicht, daß die Außenkonturlinien der Dichtungslagen in der Außenkonturlinien-Schneidstation sauber und ohne unerwünschte Verformungen der Ränder der Dichtungslagen geschnitten werden können.

Ferner ist das Freischneidwerkzeug der Freischneidstation vorteilhafterweise so ausgebildet, daß der Rand der Freischneidfläche quer zu den von dem Außenkonturlinien-Schneidwerkzeug geschnittenen Außenkonturlinien verläuft. Dadurch ist es möglich, in der Freischneidstation solche Schneidstempel zu verwenden, die einen abgerundeten Verlauf ihrer Schneidkante aufweisen.

Solche Freischneidstempel sind einfach herzustellen und unterliegen nur einem geringen Verschleiß.

Allerdings entsteht dadurch, daß der Rand der Freischneidfläche quer zu den von dem Außenkonturlinien-Schneidwerkzeug geschnittenen Außenkonturlinien verläuft, ein scharfkantiger Übergang zwischen den in der Freischneidstation geschnittenen Freischneidlinien einerseits und den in der Außenkonturlinien-Schneidstation geschnittenen Außenkonturlinien andererseits mit einer Ecke an der Stelle, an der die vorstehend genannten Linien aneinanderstoßen.

Vorzugsweise verläuft der Rand der Freischneidfläche im wesentlichen senkrecht zu den von dem Außenkonturlinien-Schneidwerkzeug geschnittenen Außenkonturlinien.

Bei einer bevorzugten Ausgestaltung des erfindungsgemäßen Verfahrens ist vorgesehen, daß die Außenkonturlinien-Schneidstation als Trennstation ausgebildet ist, in welcher die einander benachbarten Dichtungslagen vollständig voneinander getrennt werden.

Diese als Trennstation ausgebildete Außenkonturlinien-Schneidstation kann insbesondere die in der Vorschubrichtung letzte Bearbeitungsstation des Folgeverbundwerkzeugs sein.

Eine saubere Trennung der einander zugewandten Außenkonturlinien zweier einander benachbarter Dichtungslagen wird vorteilhafterweise dadurch erzielt, daß die die Schneidkante bildenden Flächen des Außenkonturlinien-Schneidwerkzeugs miteinander einen Winkel von ungefähr 90° einschließen.

Gegenstand von Anspruch 11 ist eine Dichtung, welche mindestens eine Dichtungslage umfaßt.

Wird bei der Herstellung der Dichtung ein Freischneidwerkzeug mit abgerundeter, eckenfreier Schneidkante verwendet, so umfaßt die Außenkontur der Dichtungslage eine von dem Freischneidwerkzeug geschnittene Freischneidlinie und eine von dem Außenkonturlinien-Schneidwerkzeug geschnittene Außenkonturlinie, die zusammen eine Ecke einschließen.

Um die Gefahr einer Verletzung bei der Handhabung dieser Dichtung auszuschließen, ist vorgesehen, daß die Dichtung nach Anspruch 11 mindestens eine weitere Dichtungslage umfaßt, welche über die Ecke an der ersten Dichtungslage übersteht.

Ergänzend oder alternativ hierzu ist vorgesehen, daß die Dichtung mindestens eine weitere Dichtungslage umfaßt, welche einen dem Verlauf der Außenkonturlinie oder dem Verlauf der Freischneidlinie folgenden Außenkonturlinienabschnitt umfaßt, an welchen sich im Bereich der Ecke der ersten Dichtungslage ein zweiter Außenkonturlinienabschnitt glatt anschließt.

Die weitere Dichtungslage der Dichtung kann insbesondere mittels eines Folgeverbundwerkzeugs hergestellt sein, bei welchem die Vorschubstrecke v größer ist als die Ausdehnung b der Außenkontur der fertigen Dichtungslage längs der Vorschubrichtung.

Weitere Merkmale und Vorteile der Erfindung sind Gegenstand der nachfolgenden Beschreibung und zeichnerischen Darstellung von Ausführungsbeispielen.

In den Zeichnungen zeigen:
- Fig. 1: eine schematische Prinzipdarstellung eines Folgeverbundwerkzeugs zum Herstellen von Dichtungsblechen für Metalldichtungen;
- Fig. 2: eine schematische Darstellung der aufeinanderfolgenden Bearbeitungsschritte in einem herkömmlichen Folgeverbundwerkzeug;
- Fig. 3: eine schematische Darstellung der aufeinanderfolgenden Bearbeitungsschritte in einem Folgeverbundwerkzeug, in welchem die einander zugewandten Außenkonturlinien einander benachbarter Dichtungsbleche mit derselben Schneidkante geschnitten werden und bei dem die Vorschubstrecke gleich groß ist wie die Ausdehnung eines fertigen Dichtungsblechs längs der Vorschubrichtung;
- Fig. 4: eine schematische Draufsicht auf eine mehrlagige Metalldichtung;
- Fig. 5: eine vergrößerte Darstellung des Bereichs I aus Fig. 4;
- Fig. 6: einen schematischen Längsschnitt durch die Dichtung aus den Fig. 4 und 5 längs der Linie 6-6 in Fig. 5;
- Fig. 7: einen schematischen Längsschnitt durch einen Trennstempel eines Folgeverbundwerkzeugs; und
- Fig. 8: eine schematische Darstellung der aufeinanderfolgenden Bearbeitungsschritte in einem Folgeverbundwerkzeug, in welchem die einander zugewandten Außenkonturlinien einander benachbarter Dichtungsbleche mit derselben Schneidkante geschnitten werden und bei dem die Vorschubstrecke gleich groß ist wie die Ausdehnung einer Gruppe von fertigen Dichtungsblechen längs der Vorschubrichtung.

Gleiche oder funktional äquivalente Elemente sind in allen Figuren mit denselben Bezugszeichen bezeichnet.

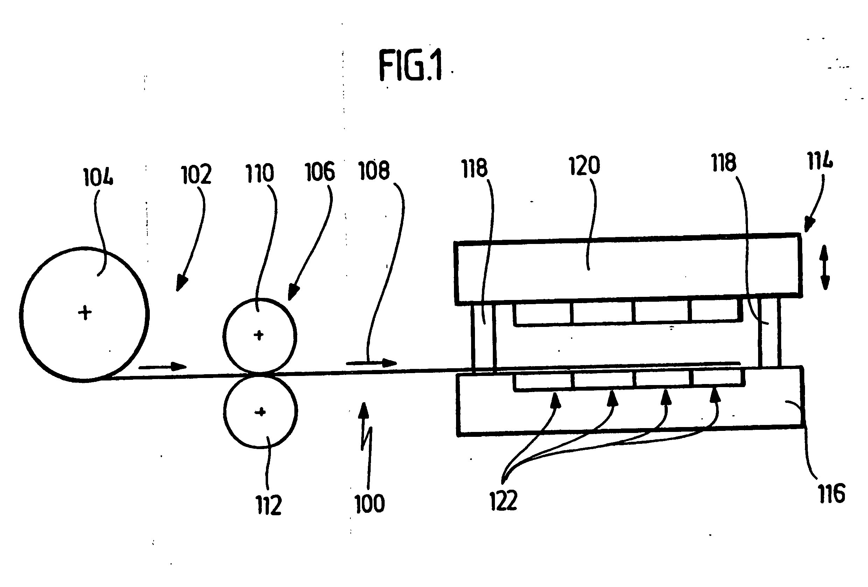

Eine in Fig. 1 schematisch dargestellte, als Ganzes mit 100 bezeichnete Vorrichtung zum Herstellen von Dichtungsblechen für Metalldichtungen umfaßt eine Ausgangsmaterial-Zuführvorrichtung 102, welche ihrerseits eine (nicht dargestellte) Halterung zum drehbaren Haltern einer Blechrolle 104 und eine Vorschubvorrichtung 106 umfaßt, welche taktweise arbeitet und das von der Blechrolle 104 abgezogene Blech während eines Vorschubtaktes um eine vorgegebene Vorschubstrecke längs der Vorschubrichtung 108 fördert.

Die Vorschubvorrichtung 106 kann beispielsweise eine Antriebswalze 110 und eine parallel zu derselben angeordnete Andruckwalze 112 umfassen, wobei das zu fördernde Blech den Spalt zwischen der Antriebswalze 110 und der Andruckwalze 112 durchläuft und durch die Reibung mit der Mantelfläche der Antriebswalze 110, die sich während eines Vorschubtaktes dreht, längs der Vorschubrichtung 108 vorwärts bewegt wird.

Die Vorschubvorrichtung 106 fördert das Blech als Ausgangsmaterial in ein als Ganzes mit 114 bezeichnetes Folgeverbundwerkzeug, welches ein stationäres Werkzeug-Unterteil 116 und ein Werkzeug-Oberteil 120 umfaßt, das an vertikalen Führungsstangen 118 verschieblich geführt und mittels einer (nicht dargestellten) mechanischen, pneumatischen oder hydraulischen Bewegungseinrichtung relativ zu dem stationären Werkzeug-Unterteil 116 verfahrbar ist.

Das Folgeverbundwerkzeug 114 umfaßt mehrere längs der Vorschubrichtung 108 aufeinanderfolgende Bearbeitungsstationen 122, welche jeweils an dem Werkzeug-Unterteil 116 und/oder an dem Werkzeug-Oberteil 120 angeordnete Bearbeitungswerkzeuge, wie beispielsweise Stanz-, Präge- oder Schneidwerkzeuge aufweisen.

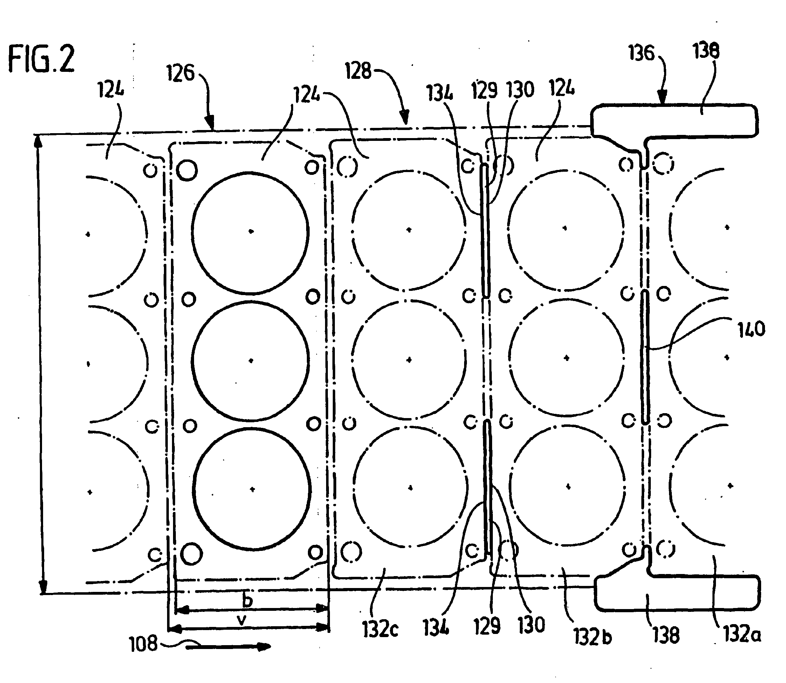

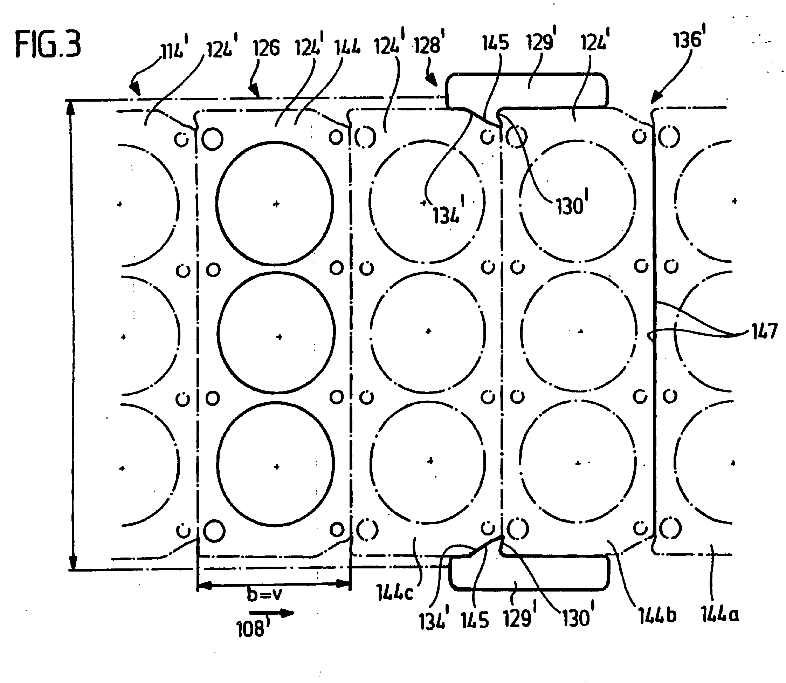

Während eines Arbeitstaktes des Folgeverbundwerkzeugs 114 wird das Werkzeug-Oberteil 120 von oben gegen das auf dem Werkzeug-Unterteil 116 aufliegende Blech gefahren, wobei die in den aufeinanderfolgenden Bearbeitungsstationen 122 befindlichen Dichtungsblechabschnitte 124 (siehe Fig. 2 und 3) gleichzeitig von den in den jeweiligen Bearbeitungsstationen 122 angeordneten Werkzeugen bearbeitet, das heißt beispielsweise gelocht, geprägt oder geschnitten, werden.

Um die Dichtungsblechabschnitte relativ zu den Bearbeitungsstationen 122 genau zu positionieren, kann dabei vorgesehen sein, daß in einer ersten Bearbeitungsstation in jeden Dichtungsblechabschnitt ein oder mehrere Positionslöcher eingestanzt werden und daß jede der nachfolgenden Bearbeitungsstationen eine entsprechende Anzahl von Positionierstiften am Werkzeug-Oberteil 120 aufweist, welche bei der Abwärtsbewegung des Werkzeug-Unterteils 116 in die jeweils zugeordneten Positionslöcher eingreifen und so die Dichtungsblechabschnitte 124 in die gewünschte Lage relativ zur jeweiligen Bearbeitungsstation 122 bringen und in dieser Lage festhalten.

Beim Zurückbewegen des Werkzeug-Oberteils 120 in seine obere Ausgangslage treten die Positionierstifte wieder aus den zugeordneten Positionierlöchern heraus. Damit ist ein Arbeitstakt des Folgeverbundwerkzeugs 114 abgeschlossen.

Im darauffolgenden Vorschubtakt des Folgeverbundwerkzeugs 114 wird das Blech und damit jeder der Dichtungsblechabschnitte 124 um die vorgegebene Vorschubstrecke, welche der Breite eines Dichtungsblechabschnitts 124 entspricht, mittels der Vorschubvorrichtung 106 längs der Vorschubrichtung 108 vorwärtsbewegt.

Wenn sich das Blech nach Abschluß des Vorschubs wieder in Ruhe befindet, beginnt der nächste Arbeitstakt des Folgeverbundwerkzeugs 114 mit dem Absenken des Werkzeug-Oberteils 120.

Fig. 2 zeigt schematisch die aufeinanderfolgenden Bearbeitungsschritte in einem herkömmlichen Folgeverbundwerkzeug, bei welchem die Vorschubstrecke v und damit die Breite der Dichtungsblechabschnitte 124 größer ist als die Breite b der Außenkontur des fertigen Dichtungsblechs, das heißt die Ausdehnung eines fertigen Dichtungsblechs b längs der Vorschubrichtung 108.

In einer als Lochstation 126 ausgebildeten ersten Bearbeitungsstation wird der während eines Arbeitstaktes darin befindliche Dichtungsblechabschnitt 124 mittels geeigneter Stanzstempel gelocht, das heißt mit den erforderlichen Durchgangsöffnungen (z.B. Brennraumöffnungen und Öffnungen für Wasser-und Ölkanäle) versehen.

In einer längs der Vorschubrichtung 108 auf die Lochstation 126 folgenden zweiten Bearbeitungsstation, die als Freischneidstation 128 ausgebildet ist, werden mittels (beispielsweise) zweier Freischneidstempel zwei Freischneidflächen 129 aus dem Blech herausgeschnitten, deren vordere Ränder 130 Außenkonturlinien eines in der Vorschubrichtung 108 weiter vorn liegenden Dichtungsblechs 132b bilden, während deren hintere Ränder 134 Außenkonturlinien eines in der Vorschubrichtung 108 weiter hinten liegenden Dichtungsblechs 132c bilden.

Die vorderen Ränder 130 und die hinteren Ränder 134 werden in der Freischneidstation 128 zwar zur gleichen Zeit, jedoch von verschiedenen, längs der Vorschubrichtung 108 um die Strecke v-b voneinander beabstandeten Schneidkanten der Freischneidstempel geschnitten.

In einer auf die Freischneidstation 128 folgenden Trennstation 136 werden mittels (beispielsweise) dreier Trennstempel das in der Vorschubrichtung 108 weiter vorn liegende Dichtungsblech 132a und das in der Vorschubrichtung 108 weiter hinten liegende Dichtungsblech 132b vollständig voneinander getrennt.

Die von den Trennstempeln der Trennstation 136 aus dem Blech herausgestanzten seitlichen Trennflächen 138 und die mittlere Trennfläche 140 überlappen dabei die von den Freischneidstempeln der Freischneidstation 128 herausgeschnittenen Freischneidflächen 129 so, daß die von den Freischneidstempeln und von den Trennstempeln geschnittenen Außenkonturlinien glatt und ohne Ausbildung von Ecken aneinander anschließen.

Auch die von den Trennstempeln der Trennstation 136 geschnittenen Außenkonturlinien der einander benachbarten Dichtungsbleche 132a, 132b werden von verschiedenen Schneidkanten geschnitten, welche voneinander mindestens um die Strecke v-b beabstandet sind.

Zusätzlich zu den vorstehend beschriebenen können in dem Folgeverbundwerkzeug 114 noch weitere Bearbeitungsstationen 122, beispielsweise Prägestationen, vorgesehen sein.

Ferner können zwischen zwei aufeinanderfolgenden Bearbeitungsstationen 122 auch Leerstationen vorgesehen sein, in welchen das Blech nicht bearbeitet wird.

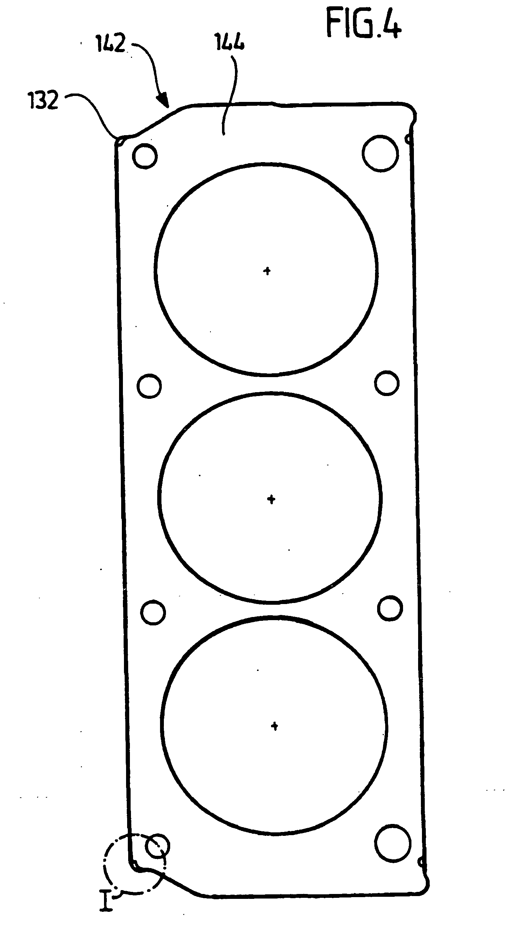

Das mit dem vorstehend beschriebenen Folgeverbundwerkzeug 114 hergestellte Dichtungsblech 132 weist eine abgerundete, eckenfreie Außenkontur auf und wird als mittlere Lage einer in den Fig. 4 bis 6 dargestellten dreilagigen Metalldichtung 142 verwendet.

Fig. 3 zeigt schematisch die aufeinanderfolgenden Bearbeitungsschritte in einem modifizierten Folgeverbundwerkzeug 114', bei welchem die Vorschubstrecke v gleich groß ist wie die Breite b der Außenkontur eines fertigen Dichtungsblechs 144, das heißt gleich groß wie die Ausdehnung des fertigen Dichtungsblechs 144 längs der Vorschubrichtung 108.

Auch dieses modifizierte Folgeverbundwerkzeug 114' umfaßt eine als Lochstation 126 ausgebildete erste Bearbeitungsstation, in welcher mittels geeigneter Stanzstempel die erforderlichen Durchgangsöffnungen in dem Dichtungsblech 144 erzeugt werden.

In einer längs der Vorschubrichtung 108 auf die Lochstation 126 folgenden zweiten Bearbeitungsstation, die als Freischneidstation 128' ausgebildet ist, werden mittels (beispielsweise) zweier Freischneidstempel zwei seitliche Freischneidflächen 129' aus dem Blech herausgeschnitten, deren vordere Ränder 130' Außenkonturlinien eines in der Vorschubrichtung 108 weiter vorn liegenden Dichtungsblechs 144b bilden, während deren hintere Ränder 134' Außenkonturlinien eines in der Vorschubrichtung 108 weiter hinten liegenden Dichtungsblechs 144c bilden.

In einer auf die Freischneidstation 128' folgenden Trennstation 136' werden mittels eines Trennstempels das in der Vorschubrichtung 108 weiter vorn liegende Dichtungsblech 144a und das in der Vorschubrichtung 108 weiter hinten liegende Dichtungsblech 144b vollständig voneinander getrennt.

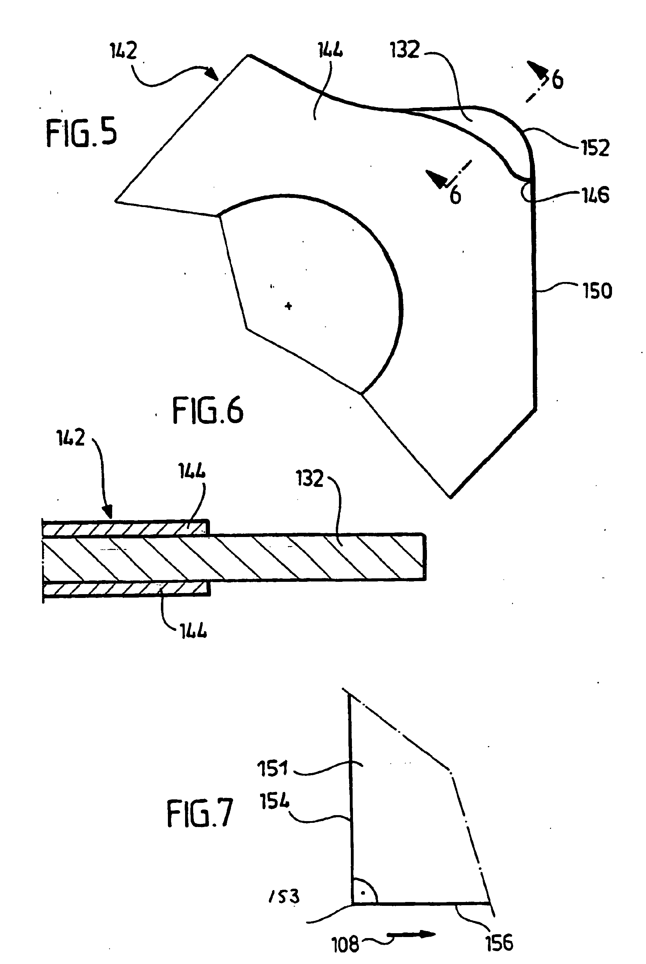

Der Trennstempel 151 der Trennstation 136' weist nur eine einzige (beispielsweise) geradlinige Schneidkante 153 auf, wobei die die Schneidkante 153 bildenden Flächen 154 und 156 des Trennstempels 151 miteinander einen Winkel von ungefähr 90° einschließen (siehe Fig. 7).

Da die miteinander zusammenfallenden Außenkonturlinien 147 der einander benachbarten Dichtungsbleche 144a, 144b von ein und derselben Schneidkante geschnitten werden, ist die für die Trennung der Dichtungsbleche 144a, 144b aufzuwendende Schneidkraft und die beim Schneiden auftretende Lärmentwicklung geringer als bei den Freischneidstempeln der Freischneidstation 128 und bei dem mittleren Trennstempel der Trennstation 136 des herkömmlichen Folgeverbundwerkzeugs 114, welche jeweils zwei verschiedene, um die Strecke v-b voneinander beabstandete Schneidkanten aufweisen.

Die Schneidkante des Trennstempels der Trennstation 136' des Folgeverbundwerkzeugs 114' taucht beim Trennvorgang in die von der Freischneidstation 128' geschnittenen seitlichen Freischneidflächen 129' ein, so daß die Außenkonturlinien 147 der Didhtungsbleche 144a, 144b sauber geschnitten werden und die Ränder der Dichtungsbleche 144a, 144b nicht verbogen werden.

Die Ränder der seitlichen Freischneidflächen 129' verlaufen im wesentlichen senkrecht zu den von dem Trennstempel der Trennstation 136' geschnittenen Außenkonturlinien der Dichtungsbleche 144a, 144b. Dadurch ist es möglich, in der Freischneidstation 129' solche Freischneidstempel zu verwenden, die einen abgerundeten, eckenfreien Verlauf ihrer Schneidkanten aufweisen.

Um die von dem Trennstempel der Trennstation 136' geschnittenen Außenkonturlinien 147 glatt, das heißt ohne Ausbildung von Ecken, an die Ränder der seitlichen Freischneidflächen 129' anschließen zu lassen, müßten sich die Freischneidstempel der Freischneidstation 128' hingegen sehr stark verjüngen, um zwei tängential zueinander verlaufende Schneidkanten auszubilden. Solche Freischneidstempel wären jedoch nur schwierig herzustellen und würden einem hohen Verschleiß unterliegen. Dieser Nachteil wird bei dem Folgeverbundwerkzeug 114' dadurch vermieden, daß die Ränder der seitlichen Freischneidflächen 129' quer, vorzugsweise im wesentlichen senkrecht, zu den von dem Trennstempel der Trennstation 136' geschnittenen Außenkonturlinien 147 verlaufen.

Allerdings entsteht durch diese Maßnahme an dem fertigen Dichtungsblech 144' ein scharfkantiger Übergang zwischen den von den Freischneidstempeln der Freischneidstation 128' geschnittenen Freischneidlinien 145 einerseits und der von dem Trennstempel der Trennstation 136' geschnittenen Außenkonturlinie 147 andererseits mit einer Ecke 146 an der Stelle, an der die vorstehend genannten Linien aneinanderstoßen.

Auch in dem Folgeverbundwerkzeug 114' können zusätzlich zu den vorstehend beschriebenen noch weitere Bearbeitungsstationen 122, beispielsweise Prägestationen, vorgesehen sein.

Ferner können auch in dem Folgeverbundwerkzeug 114' zwischen zwei aufeinanderfolgenden Bearbeitungsstationen 122 Leerstationen vorgesehen sein, in welchen das Blech nicht bearbeitet wird.

Mit dem vorstehend beschriebenen Folgeverbundwerkzeug 114' hergestellte Dichtungsbleche 144 werden als die obere und als die untere Decklage der in den Fig. 4 bis 6 dargestellten dreilagigen Metalldichtung 142 verwendet und mit dem die mittlere Lage bildenden Dichtungsblech 132, beispielsweise durch Verschweißen oder mittels Nieten, verbunden.

Wie aus Fig. 5 zu ersehen ist, sind die Dichtungsbleche 132 und 144 so ausgebildet und in der Metalldichtung 142 so relativ zueinander ausgerichtet, daß die Außenkontur des Dichtungsblechs 132 einen ersten Außenkonturlinienabschnitt 150 aufweist, welcher dem Verlauf der von dem Trennstempel der Trennstation 136' geschnittenen Außenkonturlinie 147 folgt, und einen zweiten Außenkonturlinienabschnitt 152, welcher sich im Bereich der Ecke 146 des Dichtungsblechs 144 glatt an den ersten Außenkonturlinienabschnitt 150 des Dichtungsblechs 132 anschließt, so daß die Ecke 146 an dem Dichtungsblech 144 durch das Dichtungsblech 132 überdeckt wird und insgesamt eine glatte, abgerundete Außengeometrie der Metalldichtung 142 entsteht, die keine scharfen Außenkanten aufweist, welche eine Verletzungsgefahr bei der Handhabung der Metalldichtung 142 hervorrufen könnten.

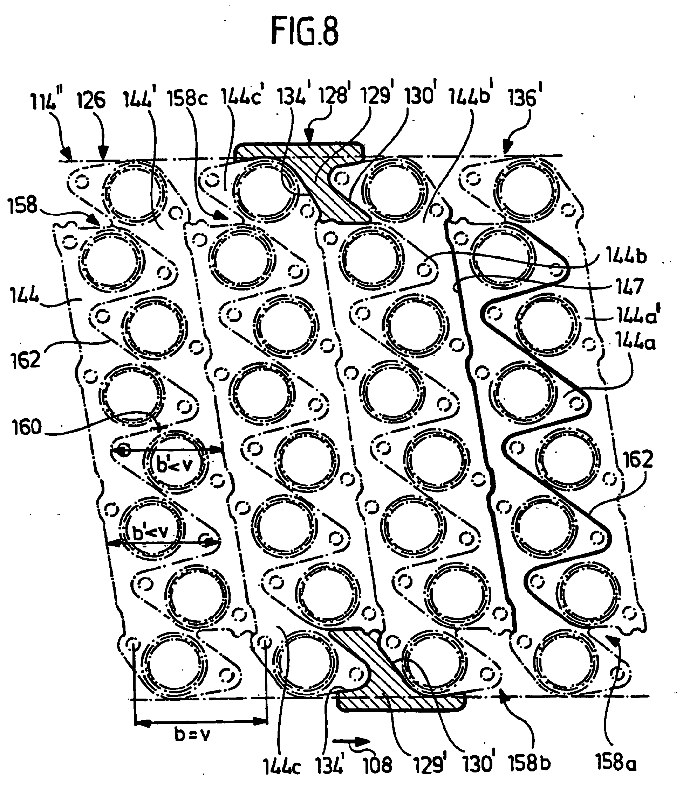

Fig. 8 zeigt schematisch die aufeinanderfolgenden Bearbeitungsschritte in einer zweiten Ausführungsform eines modifizierten Folgeverbundwerkzeugs 114", bei weichem die Vorschubstrecke v gleich groß ist wie die Breite b der Außenkontur einer Gruppe 158 von Dichtungsblechen, welche zwei Dichtungsbleche 144 und 144' umfaßt.

Wie aus Fig. 8 zu ersehen ist, weist das zweite Dichtungsblech 144' dieselbe Außenkontur auf wie das erste Dichtungsblech 144 der Dichtungsblechgruppe 158, ist aber relativ zu dem ersten Dichtungsblech 144 um 180° gedreht und quer zu der Vorschubrichtung 108 relativ zu dem ersten Dichtungsblech 144 verschoben, so daß die beiden Dichtungsbleche 144, 144' derselben Dichtungsblechgruppe 158 bezüglich eines Punktes 160 punktsymmetrisch zueinander ausgebildet und angeordnet sind.

Die beiden Dichtungsbleche 144 und 144' derselben Dichtungsblechgruppe 158 grenzen längs miteinander zusammenfallender Außenkonturlinien 162 aneinander an.

Die Breite b der Außenkontur der Dichtungsblechgruppe 158 entspricht der Ausdehnung der Dichtungsblechgruppe 158 längs der Vorschubrichtung 108 und ist größer als die Breite b' der Außenkontur eines der Dichtungsbleche 144 oder 144', das heißt größer als die Ausdehnung des fertigen Dichtungsblechs 144 oder des fertigen Dichtungsblechs 144' längs der Vorschubrichtung 108.

Auch dieses modifizierte Folgeverbundwerkzeug 114" umfaßt eine als Lochstation 126 ausgebildete erste Bearbeitungsstation, in weicher mittels geeigneter Stanzstempel die erforderlichen Durchgangsöffnungen in den Dichtungsblechen 144 und 144' erzeugt werden.

In einer längs der Vorschubrichtung 108 auf die Lochstation 126 folgenden zweiten Bearbeitungsstation, die als Freischneidstation 128' ausgebildet ist, werden mittels (beispielsweise) zweier Freischneidstempel zwei seitliche Freischneidflächen 129' aus dem Blech herausgeschnitten, deren vordere Ränder 130' Außenkonturlinien eines Dichtungsblechs 144b und eines Dichtungsblechs 144b' einer in der Vorschubrichtung 108 weiter vorne liegenden Dichtungsblechgruppe 158b bilden, während deren hintere Ränder 134' Außenkonturlinien eines Dichtungsblechs 144c und eines Dichtungsblechs 144c' einer in der Vorschubrichtung 108 weiter hinten liegenden Dichtungsblechgruppe 158c bilden.

In einer auf die Freischneidstation 128' folgenden Trennstation 136' werden mittels eines Trennstempels das Dichtungsblech 144a der in der Vorschubrichtung 108 weiter vorn liegenden Dichtungsblechgruppe 158a und das Dichtungsblech 144b' der in der Vorschubrichtung 108 weiter hinten liegenden Dichtungsblechgruppe 158b vollständig voneinander getrennt.

In derselben Trennstation 136' wird auch mittels eines Trennstempels das in der Vorschubrichtung 108 weiter vorn liegende zweite Dichtungsblech 144a' der Dichtungsblechgruppe 158a von dem in der Vorschubrichtung 108 weiter hinten liegenden Dichtungsblech 144a der Dichtungsblechgruppe 158a vollständig getrennt.

Die einander benachbarten Dichtungsbleche 144a und 144b', die zu verschiedenen Dichtungsblechgruppen 158a bzw. 158b gehören, einerseits und die beiden zur selben Dichtungsblechgruppe 158a gehörenden Dichtungsbleche 144a und 144a' andererseits können entweder mit zwei verschiedenen Trennstempeln oder mittels verschiedener Schneidkanten desselben Trennstempels voneinander getrennt werden.

In jedem Falle werden die miteinander zusammenfallenden Außenkonturlinien 147 der einander benachbarten Dichtungsbleche 144a, 144b' von ein und derselben Schneidkante geschnitten.

Ebenso werden die miteinander zusammenfallenden Außenkonturlinien 162 der zu derselben Dichtungsblechgruppe 158a gehörenden Dichtungsbleche 144a, 144a' von ein und derselben Schneidkante geschnitten.

Die Schneidkanten des Trennstempels oder der Trennstempel der Trennstation 136' des Folgeverbundwerkzeugs 114" tauchen beim Trennvorgang in die von der Freischneidstation 128' geschnittenen seitlichen Freischneidflächen 129' ein, so daß die Außenkonturlinien 147 der Dichtungsbleche 144a, 144b' und die Außenkonturlinien 162 der zur Dichtungsblechgruppe 158a gehörenden Dichtungsbleche 144a, 144a' sauber geschnitten werden und die Ränder dieser Dichtungsbleche nicht verbogen werden.

Im übrigen stimmt die zweite Ausführungsform eines modifizierten Folgeverbundwerkzeugs 114" hinsichtlich Aufbau und Funktion mit der ersten Ausführungsform eines modifizierten Folgeverbundwerkzeugs 114' überein, auf deren vorstehende Beschreibung insoweit Bezug genommen wird.

## Patentansprüche

1. Verfahren zum Herstellen einer mehrlagigen Dichtung (142), bei dem mindestens eine Dichtungslage (144) aus jeweils einem Dichtungslagenabschnitt (124') eines mehrere zusammenhängende Dichtungslagenabschnitte umfassenden Ausgangsmaterials hergestellt wird, wobei die Dichtungslagenabschnitte (124') in einem Folgeverbundwerkzeug (114'; 114") mit mehreren längs einer Vorschubrichtung (108) aufeinanderfolgenden Bearbeitungsstationen (122) während Arbeitstakten bearbeitet werden, wobei mindestens eine der Bearbeitungsstationen als eine Außenkonturlinien-Schneidstation ausgebildet ist, in welcher mittels eines Außenkonturlinien-Schneidwerkzeugs einander zugewandte Außenkonturlinien (147) zweier einander benachbarter Dichtungslagen (144a, 144b; 144a, 144b') geschnitten werden,
wobei die Dichtungslagenabschnitte (124') zwischen zwei Arbeitstakten mittels einer Vorschubvorrichtung (106) um eine Vorschubstrecke (v) längs der Vorschubrichtung (108) weiterbewegt werden, **dadurch gekennzeichnet, daß**
die Außenkonturlinien (147) der beiden einander benachbarten Dichtungslagen (144a, 144b; 144a, 144b') mit derselben Schneidkante des Außenkonturlinien-Schneidwerkzeugs geschnitten werden und die Vorschubstrecke (v) im wesentlichen gleich groß gewählt wird wie die Ausdehnung (b) der Außenkontur einer fertigen Dichtungslage (144) oder einer Gruppe (158) von fertigen Dichtungslagen (144, 144') längs der Vorschubrichtung (108), und
die Außenkontur der fertigen Dichtungslage (144) eine von einem Freischneidwerkzeug geschnittene Freischneidlinie (145) und eine von dem Außenkonturlinien-Schneidwerkzeug geschnittene Außenkonturlinie (147) umfaßt, die zusammen eine Ecke (146) einschließen, und
dass die so hergestellte Dichtungslage (144) mit mindestens einer weiteren Dichtungslage (132) verbunden wird, welche über die Ecke (146) an der ersten Dichtungslage (144) übersteht und/oder einen dem Verlauf der Außenkonturlinie (147) oder dem Verlauf der Freischneidlinie (145) folgenden Außenkonturlinienabschnitt (150) umfaßt, an welchen sich im Bereich der Ecke (146) der ersten Dichtungslage (144) ein zweiter Außenkonturlinienabschnitt (152) glatt anschließt.

2. Verfahren nach Anspruch 1, **dadurch gekennzeichnet, daß** mindestens eine der Bearbeitungsstationen (122) als Freischneidstation (128') ausgebildet ist, die in der Vorschubrichtung (108) vor der Außenkonturlinien-Schneidstation angeordnet ist und in der aus dem Ausgangsmaterial mindestens eine Freischneidfläche (129') herausgeschnitten wird, in welche die Schneidkante des Außenkonturlinien-Schneidwerkzeugs der Außenkonturlinien-Schneidstation beim Schneidvorgang eintaucht.

3. Verfahren nach Anspruch 2, **dadurch gekennzeichnet, daß** die Freischneidfläche (129') von dem Freischneidwerkzeug der Freischneidstation (128) so geschnitten wird, daß der Rand der Freischneidfläche (129') quer zu den von dem Außenkonturlinien-Schneidwerkzeug geschnittenen Außenkonturlinien (147) verläuft.

4. Verfahren nach Anspruch 3, **dadurch gekennzeichnet, daß** die Freischneidfläche (129') von dem Freischneidwerkzeug der Freischneidstation (128') so geschnitten wird, daß der Rand der Freischneidfläche (129') im wesentlichen senkrecht zu den von dem Außenkonturlinien-Schneidwerkzeug geschnittenen Außenkonturlinien (147) verläuft.

5. Verfahren nach einem der Ansprüche 1 bis 4, **dadurch gekennzeichnet, daß** die einander benachbarten Dichtungslagen (144) in der als Trennstation (136') ausgebildeten Außenkonturlinien-Schneidstation vollständig voneinander getrennt werden.

6. Verfahren nach Anspruch 5, **dadurch gekennzeichnet, daß** die Außenkonturlinien-Schneidstation die in der Vorschubrichtung (108) letzte Bearbeitungsstation (122) des Folgeverbundwerkzeugs (114'; 114") ist.

7. Verfahren nach einem der Ansprüche 1 bis 6, **dadurch gekennzeichnet, daß** die Außenkonturlinien (147) in der Außenkonturlinien-Schneidstation mittels einer Schneidkante (153) geschnitten werden, die durch Flächen (154, 156) des Außenkonturlinien-Schneidwerkzeugs gebildet wird, welche miteinander einen Winkel von ungefähr 90° einschließen.

8. Verfahren nach einem der Ansprüche 1 bis 7, **dadurch gekennzeichnet, daß** die Vorschubstrecke (v) im wesentlichen gleich groß gewählt wird wie die Ausdehnung (b) der Außenkontur einer Gruppe (158) von fertigen Dichtungslagen (144, 144') und daß einander benachbarte Dichtungslagen der Gruppe (158) in einer Trennstation (136') vollständig voneinander getrennt werden.

9. Verfahren nach Anspruch 8, **dadurch gekennzeichnet, daß** die Gruppe (158) von Dichtungslagen mindestens zwei Dichtungslagen (144, 144') umfaßt, deren einander zugewandte Außenkonturlinien (162) mit derselben Schneidkante eines Außenkonturlinien-Schneidwerkzeugs geschnitten werden.

10. Verfahren nach einem der Ansprüche 8 oder 9, **dadurch gekennzeichnet, daß** die Gruppe (158) von Dichtungslagen mindestens zwei Dichtungslagen (144, 144') umfaßt, deren Außenkonturlinien im wesentlichen punktsymmetrisch zueinander ausgebildet sind.

11. Dichtung, umfassend mindestens eine Dichtungslage (144), deren Außenkontur eine Freischneidlinie (145) und eine Außenkonturlinie (147) umfaßt, die zusammen eine Ecke (146) einschließen, und mindestens eine weitere Dichtungslage (132), **dadurch gekennzeichnet, daß** die weitere Dichtungslage (132) über die Ecke (146) an der ersten Dichtungslage (144) übersteht und/oder einen dem Verlauf der Außenkonturlinie (147) oder dem Verlauf der Freischneidlinie (145) folgenden Außenkonturlinienabschnitt (150) umfaßt, an welchen sich im Bereich der Ecke (146) der ersten Dichtungslage (144) ein zweiter Außenkonturlinienabschnitt (152) glatt anschließt.

12. Dichtung nach Anspruch 11, **dadurch gekennzeichnet, daß** die weitere Dichtungslage (132) mittels eines-Folgeverbundwerkzeugs hergestellt ist, bei welchem die Vorschubstrecke (v) größer ist als die Ausdehnung (b) der Außenkontur der fertigen Dichtungslage (132) längs der Vorschubrichtung (108).

## Claims

1. A process for the manufacture of a multi-layer gasket (142), during which at least one gasket layer (144) is produced from in each case a gasket layer portion (124') of a starting material comprising several contiguous gasket layer portions, whereby the gasket layer portions (124') are machined in a follow-on composite tool (114'; 114") having several machining stations (122) following one another in a feed direction (108) during operating cycles, whereby at least one of the machining stations is designed as an outer contour line cutting station, in which facing outer contour lines (147) of two adjacent gasket layers (144a, 144b; 144a, 144b') are cut by means of an outer contour line cutting tool,
whereby the gasket layer portions (124') are moved further along the feed direction (108) by a feed distance (v) by means of a feed device (106) between two operating cycles, **characterised in that** the outer contour lines (147) of the two adjacent gasket layers (144a, 144b; 144a, 144b') are cut with the same cutting edge of the outer contour line cutting tool and the feed distance (v) is chosen to be substantially the same as the dimension (b) of the outer contour of a finished gasket layer (144) or of a group (158) of finished gasket layers (144, 144') along the feed direction (108), and the outer contour of the finished gasket layer (144) comprises a free-cutting line (145) cut by a free-cutting tool and an outer contour line (147) cut by the outer contour line cutting tool, which together enclose a corner (146),
and **in that** the gasket layer (144) produced in this manner is connected to at least one further gasket layer (132), which projects over the corner (146) at the first gasket layer (144) and/or comprises an outer contour line portion (150) following the path of the outer contour line (147) or the path of the free-cutting line (145), to which a second outer contour line portion (152) is smoothly joined in the vicinity of the corner (146) of the first gasket layer (144).

2. A process according to Claim 1,
**characterised in that** at least one of the machining stations (122) is designed as a free-cutting station (128'), which is disposed in front of the outer contour line cutting station in the feed direction (108) and in which at least one free-cutting area (129') is cut out of the starting material, into which the cutting edge of the outer contour line cutting tool of the outer contour line cutting station dips during the cutting operation.

3. A process according to Claim 2,
**characterised in that** the free-cutting area (129') is cut by the free-cutting tool of the free-cutting station (128) so that the edge of the free-cutting area (129') extends transversely to the outer contour lines (147) cut by the outer contour line cutting tool.

4. A process according to Claim 3,
**characterised in that** the free-cutting area (129') is cut by the free-cutting tool of the free-cutting station (128') so that the edge of the free-cutting area (129') extends substantially perpendicularly to the outer contour lines (147) cut by the outer contour line cutting tool.

5. A process according to one of Claims 1 to 4,
**characterised in that** the adjacent gasket layers (144) are completely separated from each other in the outer contour line cutting station that is designed as a separating station (136').

6. A process according to Claim 5,
**characterised in that** the outer contour line cutting station is the last machining station (122) of the follow-on composite tool (114'; 114") in the feed direction (108).

7. A process according to one of Claims 1 to 6,
**characterised in that** the outer contour lines (147) are cut in the outer contour line cutting station by means of a cutting edge (153) which is formed by faces (154, 156) of the outer contour line cutting tool, which together enclose an angle of approximately 90°.

8. A process according to one of Claims 1 to 7,
**characterised in that** the feed distance (v) is chosen to be substantially the same as the dimension (b) of the outer contour of a group (158) of finished gasket layers (144, 144')
and **in that** adjacent gasket layers of the group (158) are completely separated from each other in a separating station (136').

9. A process according to Claim 8,
**characterised in that** the group (158) of gasket layers comprises at least two gasket layers (144, 144'), in which the facing outer contour lines (162) are cut with the same cutting edge of an outer contour line cutting tool.

10. A process according to one of Claims 8 or 9,
**characterised in that** the group (158) of gasket layers comprises at least two gasket layers (144, 144'), in which the outer contour lines are designed to be substantially point symmetrical to each other.

11. A gasket, comprising at least one gasket layer (144), the outer contour of which comprises a free-cutting line (145) and an outer contour line (147), which together enclose a corner (146), and at least one further gasket layer (132),
**characterised in that** the further gasket layer (132) projects over the corner (146) on the first gasket layer (144) and/or comprises an outer contour line portion (150) following the path of the outer contour line (147) or the path of the free-cutting line (145), to which a second outer contour line portion (152) is smoothly joined in the vicinity of the corner (146) of the first gasket layer (144).

12. A gasket according to Claim 11,
**characterised in that** the further gasket layer (132) is produced by means of a follow-on composite tool, in which the feed distance (v) is greater than the dimension (b) of the outer contour of the finished gasket layer (132) along the feed direction (108).

## Revendications

1. Procédé pour réaliser un joint d'étanchéité (142) à plusieurs couches,
dans lequel au moins une couche de joint (144) est réalisée à partir d'au moins un tronçon respectif de couche de joint (124') d'un matériau de départ comprenant plusieurs tronçons de couches de joint attachés les uns aux autres, dans lequel les tronçons de couches de joint (124') sont usinés dans un outil à suivre composé (114' ; 114") comprenant plusieurs postes d'usinage (122) successifs le long d'une direction d'avance (108) pendant des cycles de travail, l'un au moins des postes d'usinage est réalisé sous la forme d'un poste de coupe des lignes de contour extérieur, dans lequel des lignes de contour extérieur (147) tournées l'une vers l'autre de deux couches de joint voisines (144a, 144b ; 144a, 144b') sont coupées au moyen d'un outil de coupe des lignes de contour extérieur,
dans lequel les tronçons de couches de joint (124') continuent à être transportés entre deux cycles de travail sur un trajet d'avance (v) le long de la direction d'avance (108) au moyen d'un dispositif d'avance (106),
**caractérisé en ce que**
les lignes de contour extérieur (147) des deux couches de joint mutuellement voisines (144a, 144b ; 144a, 144b') sont coupées par la même arête de coupe de l'outil de coupe des lignes de contour extérieur, et le trajet d'avance (v) est choisi sensiblement égal à l'extension (b) du contour extérieur d'une couche de joint finie (144) ou d'un groupe (158) de couches de joint finies (144, 144') le long de la direction d'avance (108), et
le contour extérieur de la couche de joint finie (144) comprend une ligne coupée dégagée (145) coupée par un outil de coupe de dégagement, et une ligne de contour extérieur (147) coupée par l'outil de coupe des lignes de contour extérieur, qui définissent ensemble un coin (146), et
**en ce que** la couche de joint (144) ainsi réalisée est reliée à au moins une autre couche de joint (132) qui dépasse au-delà du coin (146) sur la première couche de joint (144) et/ou comprend un tronçon de ligne de contour extérieur qui suit le tracé de la ligne de contour extérieur (147) ou le tracé de la ligne coupée dégagée (145) et auquel se raccorde de façon lisse un second tronçon de ligne de contour extérieur (152) dans la région du coin (146) de la première couche de joint (144).

2. Procédé selon la revendication 1, **caractérisé en ce que** l'un au moins des postes d'usinage (122) est réalisé sous la forme d'un poste de coupe de dégagement (128') qui est agencé en avant du poste de coupe des lignes de contour extérieur dans la direction d'avance (108) et dans lequel au moins une surface coupée dégagée (129') est coupée dans le matériau de départ, surface dans laquelle vient plonger l'arête de coupe de l'outil de coupe des lignes de contour extérieur du poste de coupe des lignes de contour extérieur lors de l'opération de coupe.

3. Procédé selon la revendication 2, **caractérisé en ce que** la surface coupée dégagée (129') est coupée par l'outil de coupe de dégagement du poste de coupe de dégagement (128) de telle façon que le bord de la surface coupée dégagée (129') s'étend transversalement aux lignes de contour extérieur (147) coupées par l'outil de coupe des lignes de contour extérieur.

4. Procédé selon la revendication 3, **caractérisé en ce que** la surface coupée dégagée (129') est coupée par l'outil de coupe de dégagement du poste de coupe de dégagement (128') de telle façon que le bord de la surface de coupe dégagée (129') s'étend sensiblement perpendiculairement aux lignes de contour extérieur (147) coupées par l'outil de coupe des lignes de contour extérieur.

5. Procédé selon l'une des revendications 1 à 4, **caractérisé en ce que** les couches de joint mutuellement voisines (144) sont complètement séparées l'une de l'autre dans le poste de coupe des lignes de contour extérieur réalisé sous forme de postes de séparation (136').

6. Procédé selon la revendication 5, **caractérisé en ce que** le poste de coupe des lignes de contour extérieur est le dernier poste de d'usinage (122) en direction d'avancé (108) de l'outil à suivre composé (114' ; 114").

7. Procédé selon l'une les revendications 1 à 6, **caractérisé en ce que** les lignes de contour extérieur (147) sont coupées dans le poste de coupe des lignes de contour extérieur au moyen d'une arête de coupe (153) qui est formée par des surfaces (154, 156) de l'outil de coupe des lignes de contour extérieur, qui définissent conjointement un angle d'environ 90°.

8. Procédé selon l'une des revendications 1 à 7, **caractérisé en ce que** le trajet d'avance (v) est choisi sensiblement égal à l'extension (b) du contour extérieur d'un groupe (158) de couches de joint finies (144 ; 144', et **en ce que** des couches de joint mutuellement voisines du groupe (158) sont complètement séparées l'une de l'autre dans un poste de séparation (136').

9. Procédé selon la revendication 8, **caractérisé en ce que** le groupe (158) de couches de joint comprend au moins deux couches de joint (144, 144') dont les lignes de contour extérieur (162) tournées l'une vers l'autre sont coupées par la même arête de coupe d'un outil de coupe des lignes de contour extérieur.

10. Procédé selon l'une des revendications 8 ou 9, **caractérisé en ce que** le groupe (158) de couches de joint comprend au moins deux couches de joint (144, 144') dont les lignes de contour extérieur sont réalisées sensiblement à symétrie ponctuelle l'une par rapport à l'autre.

11. Joint d'étanchéité, comprenant au moins une couche de joint (144), dont le contour extérieur comprend une ligne coupée dégagée (145) et une ligne de contour extérieur (147) qui définissent ensemble un coin (146), et au moins une autre couche de joint (132),
**caractérisé en ce que** l'autre couche de joint (132) dépasse au-delà du coin (146) sur la première couche de joint (144) et/ou comprend un tronçon de ligne de contour extérieur qui suit le tracé de la ligne de contour extérieur (147) ou le tracé de la ligne coupée dégagée (145), auquel se raccorde de façon lisse un second tronçon de ligne de contour extérieur (152) dans la région du coin (146) de la première couche de joint (144).

12. Joint d'étanchéité selon la revendication 11, **caractérisé en ce que** l'autre couche de joint (132) est réalisée au moyen d'un outil composé à suivre, dans lequel le trajet d'avance (v) est supérieur à l'extension (b) du contour extérieur de la couche de joint finie (132) le long de la direction d'avance (108).
